# EUROPEAN PATENT APPLICATION

(11) **EP 1 396 220 A1**
(43) Date of publication of application: **10.03.2004**
(21) Application number: 02256141.9
(22) Date of filing: 04.09.2002
(51) Int. Cl.: A47J 42/56, A47J 43/046

(54) **Improvements in and relating to food processors**

(71) Applicant: Newway Electrical Industries Limited, San Po Kong, Kowloon, Hong Kong (HK)
(72) Inventor: Yiu, Chung Kwong, Hong Kong (HK); Lau, Nam Fong, New Territories, Hong Kong (HK)
(74) Representative: Goddard, Frances Anna

(57) **Abstract**

A food processor (1) comprises a processing container (3) containing a processing blade (20), a lid (4) and a drive unit (2). Both the lid (4) and the drive unit (2) are connectable to the processing container (3). The drive unit (2) is operable to drive the processing blade (20) only when the lid (4) is fitted and when the processing container (3) is locked onto the drive unit (2).

## Description

The present invention relates to food processors, in particular, although not exclusively, to blenders.

It is well known that blenders comprise a jug for containing a processing blade, which jug attaches to a base motor unit for driving the processing blade. Generally, such blenders have a safety device such that the motor is only activated when the jug is locked onto the motor base.

It is common to find a blender jug having an integral handle formed from the same material as the jug, which material is usually glass.

Prior art blenders do not account for hazards associated with the rotating blade whilst the lid of the blender is removed. When the blade rotates, without the lid, material contained within the jug may be displaced from the jug.

A more serious hazard, associated with an open blender jug during operation of the blade, may be injury to the operator; for example, if the operator tries to push material into the jug, it is likely that injury to the operator's fingers and/or hands will be sustained.

Therefore, it is an object of preferred embodiments of the present invention to provide an improved blender.

Accordingly, the present invention provides a food processor comprising a processing container having processing means, a lid engageable with the processing container, and a drive unit engageable with the processing container, the drive unit being operable to drive the processing means only when both the lid and the drive unit are operably engaged with the processing container.

Suitably, the processing container comprises a jug. The jug may comprise a base unit, which base unit may be integral with or separate from the jug.

Suitably, the processing container comprises a handle. The handle suitably has an elongate conformation. Advantageously, the handle extends along the full height of the processing container.

Preferably, the handle comprises a first member and a second member. Suitably, the first and second members are complementary elongate portions joining together to form the handle.

Suitably, the handle, and preferably the first member of the handle, comprises attachment means to allow the handle to be attached to the processing container. Any suitable fixing means may be used with the attachment means to attach the handle to the container. For example, the fixing means may comprise a mechanical fastener, such as a screw, rivet or similar. Alternatively, or in addition, the fixing means may comprise any suitable adhesive, cement or the like.

Suitably, the first member provides an inner surface of the handle. Preferably, part, at least, of a surface of the first member comprises an undulating profile providing a gripping section for a user.

Suitably, the second member provides an outer surface of the handle.

The handle suitably comprises a passage extending therein, along at least a portion of the longitudinal extent thereof. The handle may be hollow along at least a portion thereof. Preferably, the handle is hollow along substantially the full, and more preferably the full, extent thereof.

Preferably, the food processor further comprises actuation means for signalling that the lid is operably engaged with the processing container.

Suitably, the actuation means is movable between an open position, wherein the lid is not operably engaged with the processing container, and a closed position, wherein the lid is operably engaged with the processing container. Suitably, the actuation means is biased into an open position.

Suitably, the actuation means is an elongate member having a first and second end. Suitably, a pressure applied at the first end moves the actuation means to the closed position.

Alternatively, or in addition, the actuation means may comprise an electrical contact. Suitably, the electrical contact is in an open state when the lid is not operably engaged with the processing container and in a closed state when the lid is operably engaged with the processing container.

The actuation means may be conductive. The actuation means may comprise a conductive portion.

Suitably, the actuation means is associated with the handle of the processing container. Suitably, the actuation means extends along the full extent of the handle. Suitably, part, at least, of the actuation means is contained within the handle. Suitably, the handle comprises a passage extending along the full extent thereof and the actuation means extends along the full extent of the passage. Preferably, the handle is hollow along the full extent thereof and the actuation means is contained within the handle and extends along the full extent thereof. The actuation means may extend beyond one or both ends of the handle.

Suitably, the lid is operably engaged with the processing container when the lid is locked in a closed position on the processing container.

Suitably, the food processor comprises alignment means, for positioning the processing container relative to the drive unit. Any suitable alignment means may be used.

The alignment means may comprise an opening in the drive unit for receiving an element of the processing container, or vice versa. Suitably, the alignment means comprises an opening in the drive unit for receiving the actuation means.

Suitably, the drive unit comprises control means, which control means comprises a switch assembly.

The switch assembly suitably comprises first and second contacts, which are biased into an open position. Suitably, at least one of, and preferably both of, the first and second contacts are spring mounted. Suitably, one or both of the first and second contacts are mounted on a contact holder.

Suitably, movement of the actuation means causes movement of the first and/or second contacts. Suitably, the actuation means contacts the first and/or second contact in order to move the first and second contacts from the open position to the closed position. Preferably, the actuation means contacts the contact holder of the first and/or second contact in order to move the first and second contacts from the open position to the closed position.

Suitably, the switch assembly co-operates with the actuation means and the alignment means such that when the processing container is correctly positioned on the drive unit and the lid is operably engaged with the processing container, the switch assembly allows activation of the control means.

Suitably, movement of the actuation means indicates to the switch assembly that the lid is operably engaged with the processing container.

The lid may be configured to co-operate with the actuation means so as to effect movement of the actuation means. Suitably, the lid comprises a protrusion, which interacts with the actuation means when the lid is operably engaged with the processing container to effect movement of the actuation means.

Suitably, the processing means is part of the base unit. Suitably, the processing means is detachable from the base unit; therefore facilitating easier cleaning.

The lid may comprise an opening and a removable plug. The opening advantageously provides a filling port for safe addition of material to the processing container whilst the food processor is in use.

An embodiment of the invention will now be described, by way of example only, with reference to the accompanying schematic drawings, in which:
Figure 1 is a partially exploded view of a blender type food processor;
Figure 2 shows the blender of figure 1 when assembled for use;
Figure 3 shows an exploded view of a processing container for the blender of figures 1 and 2;
Figure 4 shows an exploded view of the drive unit of the blender of figures 1 and 2;
Figure 5a shows the switch assembly of figure 4 as assembled and viewed from the direction indicated by arrow A;
Figure 5b shows the switch assembly of figure 4 as assembled and viewed from the direction indicated by arrow B;
Figure 6a shows the switch assembly of figures 5a and 5b in an open position;
Figure 6b shows the switch assembly of figure 6b in a closed position; and
Figure 7 shows a sectional view of the blender as previously shown in figure 2.

Throughout the figures like reference numerals are used to refer to like features.

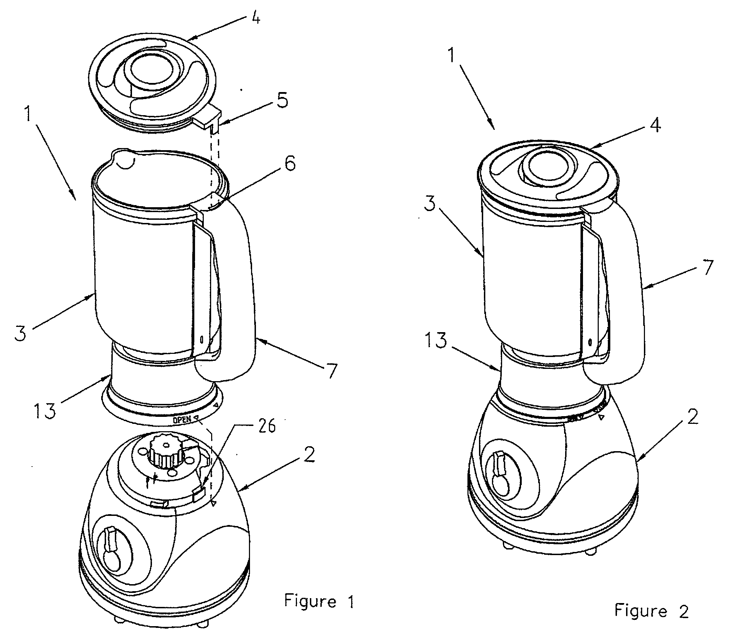

The blender 1, of figures 1 to 6, substantially consists of three main parts, a drive unit 2, a processing container 3 and a lid 4.

The processing container 3 consists of a handle assembly 7 and a jug 9.

The jug 9 has a base unit 13. A processing blade 20 is located in the base unit 13.

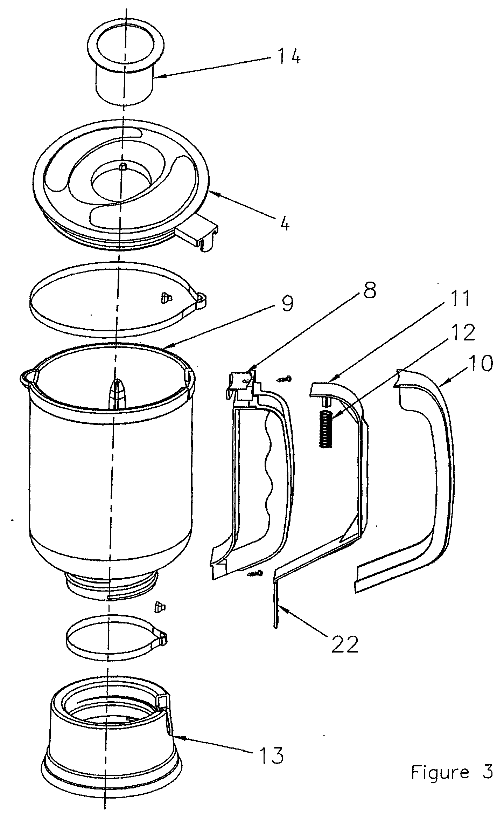

The handle assembly 7 (shown exploded in Figure 3) extends the full height of the jug 9, and consists substantially of two elongate members 8, 10. An inner member 8 of the handle assembly has an undulating profile to provide a comfortable grip for the operator. The inner member 8 also provides attachment means for connecting the handle assembly 7 to the jug 9. In the embodiment shown, the inner member 8 is connected to the jug 9 by screws, but any other mechanical fastener, adhesive or a combination thereof may be used.

An outer member 10 of the handle assembly 7 provides the outer casing for the handle assembly 7. The inner 8 and outer 10 members form two halves of the handle assembly 7, which when joined together provide a hollow handle 7.

An actuator 11 has a shape that corresponds substantially with the profile of the handle assembly 7. The actuator 11 extends through the hollow handle assembly 7. A spring 12 is seated between the upper end of the actuator 11 and the interior upper surface of the inner member 8. The spring 12 biases the upper end of the actuator 11 towards the outer member 10.

A slot 6 is provided at the top of the handle assembly 7, between the inner 8 and outer 10 members, providing access to the upper end of the actuator 11.

The lid 4 has a protruding lug 5 that fits into slot 6 when the lid 4 is fitted to the jug 9. The lid 4 also has an opening and a removable plug 14 to allow material to be added to the jug 9 whilst the blender 1 operates.

A drive means 24 housed in the drive unit 2 provides driving power to the processing blade 20 via a cog 21. The drive unit 2 comprises a safety switch assembly 15 that will prevent activation of the drive means 24 unless electrical contact is made between contacts 16, 17 of the switch assembly 15.

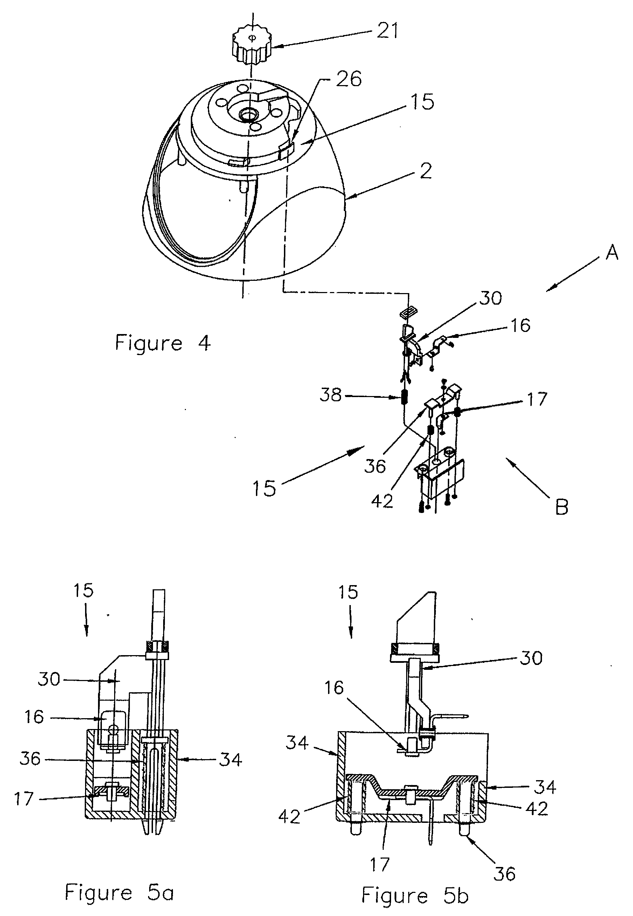

The switch assembly is shown in exploded view in figure 4 and assembled in figures 51, 5b, 6a and 6b.

The switch assembly 15 comprises a first contact holder 30, which has a dog-legged configuration. The switch assembly further comprises a second contact holder 36. The first contact 16 is mounted in the contact support 32 and the second contact 17 is mounted in the second contact holder 36. In this embodiment, the first contact 16 and the second contact 17 are connected to the respective contact holder 30, 36 by means of a silver faced bi-metallic rivet.

The first and second contacts 16, 17 are mounted within a housing 34. The first contact holder 30 is spring mounted within the housing 34 by means of a spring 38. The second contact holder 36 is spring mounted within the housing 34 by means of springs 42.

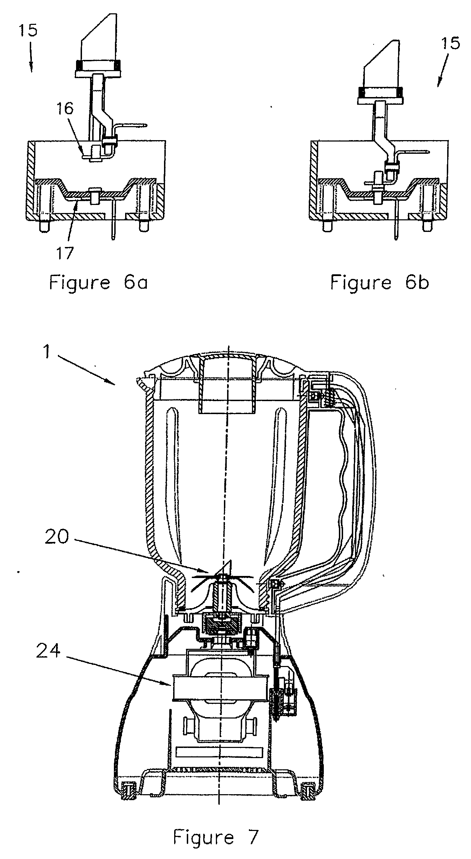

As can be seen from figures 6a and 6b, when the switch assembly 15 is open, the contacts 16, and 17 are maintained separated from one another by means of the spring 38. When a downwards force is applied to the first contact holder 30 by means of the actuator 11, the spring force 38 is overcome and the contacts 16, 17 are bought together to move the switch assembly to the closed position.

In the closed position, the electric circuit to the drive unit 2 can be completed to allow activation of the drive means 24.

The drive unit 2 further comprises an alignment opening 26. The alignment opening 26 is located to be aligned with the lower end 22 of the actuator 11 when the jug 9 is correctly positioned on the drive unit 2.

Safe operation of the blender 1 depends on both, the lid 4 being fitted to the jug 9, and the processing container 3 being correctly aligned on the drive unit 2.

The processing container 3 attaches to the drive unit 2, via the base unit 13, by twisting into a locking position, in which it is correctly aligned. The locked and unlocked positions are indicated visually by alignment of arrows on the casing of the drive unit 2 and the casing of the base unit 13 (see figure 1).

When the base unit 13 is locked onto the drive unit 2, the lower end 22 of the actuator 11 is axially aligned with the safety switch assembly 15. When the lid 4 is fitted on the jug 9 the protruding lug 5 enters the slot 6 (see Figure 1). The lug 5 connects with the upper end of the actuator 11 and pushes it downward against the restraint of spring 12. As the actuator 11 moves downwards its lower end 22 passes through the alignment opening 26 and makes contact with the first contact holder 30 of the safety switch assembly 15 which effects contact of the first and second contacts 16,17 allowing current flow through the safety switch assembly 15 allowing safe operation of the blender 1 via the control unit.

Conversely, removal of the lid 4 causes expansion of the spring 12, thereby raising the actuator 11 to break the contact between the lower end 22 of the actuator 11 and the first contact holder 30. The force of spring 38, will then cause the first and second contact 16, 17 to separate, thus preventing operation of the drive means 24.

Only when both the first 16 and second 17 contacts are closed can current flow through the switch assembly 15 to activate the processing blade 20.

## Claims

1. A food processor comprising a processing container (3) having processing means (20), a lid (4) engageable with the processing container (3), and a drive unit (2) engageable with the processing container (3), the drive unit (2) being operable to drive the processing means (20) only when both the lid (4) and the drive unit (2) are operably engaged with the processing container (3).

2. A food processor according to claim 1, wherein the processing container (3) comprises a jug (9), a handle (7) and actuation means (11).

3. A food processor according to claim 2, wherein the handle (7) is hollow.

4. A food processor according to claim 2 or 3, wherein the actuation means (11) is an elongate member having a first end and a second end (22).

5. A food processor according to claim 2, 3 or 4, wherein the actuation means (11) extends within the handle (7).

6. A food processor according to any one of the preceding claims, wherein the drive unit (2) comprises control means, the control means comprising a switch assembly (15).

7. A food processor according to claim 6 when dependent upon any one of claims 2-5, wherein movement of the actuation means (11) indicates to the switch assembly (15) that the lid (4) is operably engaged with the processing container (3).

8. A food processor according to any one of claims 2-7, wherein the lid (4) is configured to co-operate with the actuation means (11) so as to effect movement of the actuation means (11) when the lid (4) is operably engaged with the processing container (3).

9. A food processor according to any one of claims 2 to 8, wherein the actuation means (11) is biased into an open position, when the lid (4) is not operably engaged with the processing container (3).

10. A food processor according to any one of claims 7-9, wherein movement of the actuation means (11) effects movement of a contact (16) in the switch assembly (15) to moved the switch assembly (15) from an open condition to a closed condition.

11. A food processor according to any one of claims 2 to 10, wherein the jug (9) comprises a base unit (13).

12. A food processor according to claim 11, wherein the processing means (20) is part of the base unit (13).

13. A food processor according to claim 12, wherein the processing means (20) is detachable from the base unit (13).

14. A food processor according to any one of claims 2 to 13, wherein the drive unit (2) comprises alignment means (26) located to be aligned with a lower end (22) of the actuation means (11) when the processing container (3) is correctly positioned on the drive unit (2).
